# EUROPEAN PATENT SPECIFICATION

(11) **EP 0 677 965 B1**
(45) Date of publication and mention of the grant of the patent: **22.10.2003**
(21) Application number: 95301549.2
(22) Date of filing: 09.03.1995
(51) Int. Cl.: H04N 7/24, H04L 1/00, H04L 25/497

(54) **Partial response trellis decoder**
Partial-Response-Trellis-Dekoder
Décodeur en treillis à réponse partielle

(30) Priority: 12.04.1994 KR 9407640; 12.04.1994 KR 9407641
(43) Date of publication of application: 18.10.1995
(73) Proprietor: LG ELECTRONICS INC., Seoul (KR)
(72) Inventor: Kim, Dae Jin, Seongnam-si, Kyungki-do (KR); Kwak, Heung Sik, Seongnam-si, Kyungki-do (KR); Nam, Ho Jun, Kwanak-ku, Seoul (KR)
(74) Representative: McLeish, Nicholas Alistair Maxwell

(56) References cited:
- EP-A- 0 353 694
- EP-A- 0 525 641
- US-A- 4 493 082
- US-A- 5 408 502
- KIRKLAND W R ET AL: "HIGH-SPEED VITERBI DECODER MEMORY DESIGN. CONCEPTION DE LA MEMOIRE HAUTE VITESSE D'UN DECODEUR DE VITERBI" CANADIAN JOURNAL OF ELECTRICAL AND COMPUTER ENGINEERING/ REVUE CANADIENNE DE GENIE ELECTRIQUE AND INFORMATIQUE, vol. 15, no. 3, 1 August 1990, pages 107-114, XP000651333

## Description

### Background of the Invention

The present invention relates to a partial response trellis decoder concerning a trellis coded modulation in a high definition television (HDTV).

In general, a HDTV broadcasting method performs a transmission at the same manner as that of National Television System Committee (NTSC) in frequency, 6MHz. However, differently from the NTSC, since the HDTV broadcasting transmission is performed digitally, the broadcasting and receiving transmission with a double high definition of the NTSC broadcasting method are achieved, in view of width and length of the screen.

The Grand Alliance of the U.S.A. has recently proposed eight vestigial sideband modulation (VSB) method as a HDTV transmission method.

Here, according to the eight VSB method, after 2 bit input data is received, upper one bit is not coded in a Trellis encoder but the remaining lower one bit is a half convolutionally coded to form two bits, thereby generating three bits in total. That is to say, in the 8 VSB method, a symbol composed of two bits is coded into three bits and is then transmitted at eight levels.

This will now be described with reference to the accompanying drawings.

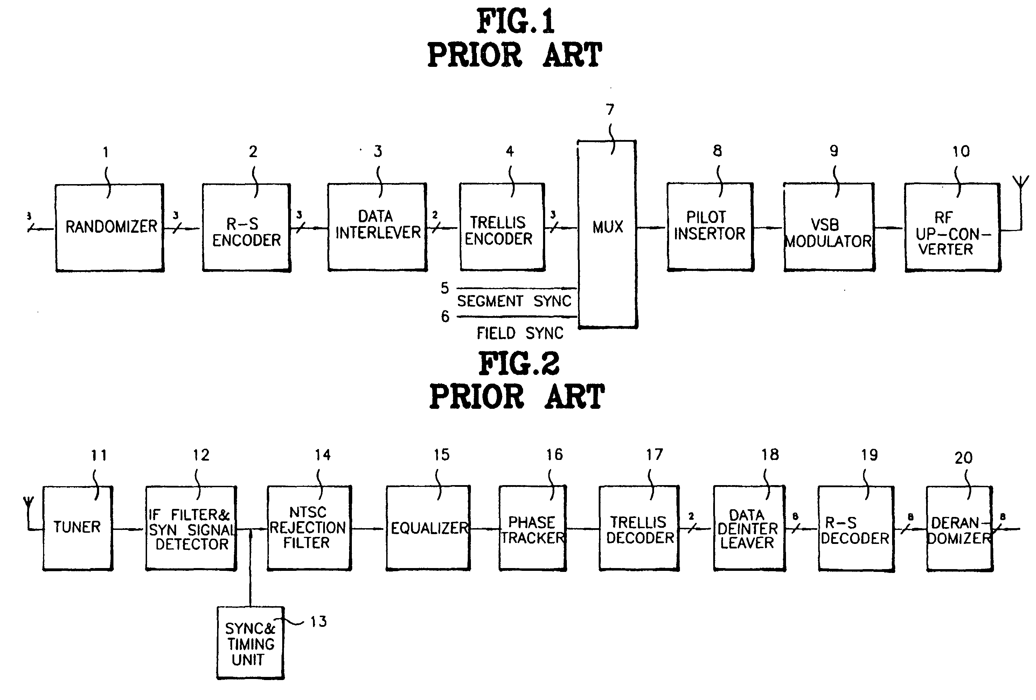

FIG.1 is a schematic diagram of the transmission side of a general HDTV, and FIG.2 is a schematic diagram of the reception side of a general HDTV.

As shown in FIG.1, the transmission side includes a data randomizer 1 for performing an exclusive OR operation of a video, audio and auxiliary signal data which are input in the unit of a byte, with respect to pseudo random sequence and then making data randomly, a Reed-Solomon encoder 2 for Reed-Solomon (RS) encoding the data output from randomizer 1 so as to supply an error correction capability for noise or interference generated in a channel, a data interleaver 3 for interleaving the data output from R-S encoder 2 from each other, a Trellis encoder 4 for Trellis encoding the data output from data interleaver 3, a multiplexer 8 for adding a segment synchronization signal 5 and field synchronization 6 to the signal output from Trellis encoder 4, a pilot inserter 8 for adding a pilot which helps the signal output from multiplexer 7 so as to perform an automatic frequency control (AFC) efficiently, a VSB modulator 9 for modulating the signal output from pilot inserter 8 with a VSB, and a radio frequency up-converter 10 for transmitting the signal from VSB modulator 9.

Also, as shown in FIG.2, the reception side includes a tuner 11 for tuning a signal input via an antennae, an IF filter & synchronous detector 12 for demodulating the signal output from tuner 11 into a band of 44MHz, a sync & timing unit 13 for locating a symbol timing, data segment synch and data field sync from the signal output from IF filter & synchronous detector 12, an NTSC rejection filter 14 for NTSC rejection-filtering the signal output from IF filter & synchronous detector 12 in case of a co-channel NTSC interference, an equalizer 15 for removing a ghost from the signal output from NTSC rejection filter 14, a phase tracker 16 for correcting a phase error of the signal output from equalizer 15, a Trellis decoder 17 for Trellis decoding the signal output from phase tracker 16 to detect data, a data deinterleaver 18 for deinterleaving to separate a burst error from the signal output from Trellis decoder 17, a R-S decoder 19 for RS decoding the signal output from data deinterleaver 18, and a data derandomizer 20 for derandomizing the signal output from R-S decoder 19.

The operation of the transmission and reception sides of a HDTV having the aforementioned configuration will be described.

Data to be transmitted is randomized in data randomizer 1 by a pseudo random sequence and exclusive OR operation and is provided with an error correcting capability for noise or interference generated in a channel by being RS coded in R-S encoder 2 under the condition RS (208, 188) t = 10.

RS coding can correct all errors even if 20 byte redundance out of 188 bytes are added to generate 10 errors.

The data output from R-S encoder 2 are interleaved with each other in the preparation for the case when burst error is generated in data interleaver 3. That is to say, when burst error is generated, horizontally input data is read vertically to be output so as to compensate the burst error.

The signal output from data interleaver 3 is Trellis coding modulated in Trellis encoder 4 to then be output. That is to say, the data output from data interleaver 3 is input by 2 bits and the upper one bit is not coded to then be transmitted but the lower one bit is convolutionally coded to be 2 bits, thereby becoming 3 bits in total. Thereafter, the data is Trellis coding modulated, that is, the data is mapped into 8 levels having a high error correction capability.

The Trellis coded modulation (TCM) method by which the convolutionally coded signal is modulated is a channel coding method capable of obtaining a signal-to-noise ratio (SNR) more than about 3dB without a loss of channel band width. For this reason, the transmission and reception sides for a HDTV adopt both the RS coding method and TCM method.

The signal output from Trellis encoder 4 is supplemented with segment sync signal 5 and field sync signal 6 in multiplexer 7 and is supplemented with pilot in pilot insertor 8 so that the reception side perform the AFC efficiently.

The signal output from pilot insertor 8 is transmitted through antennae via VSB modulator 9 and RF up-converter d10.

Meanwhile, in the reception side, the processes are performed inversely compared to that in the transmission side. The signal input through antennae is demodulated into the intermediate frequency band of 44MHz via tuner 11 and IF filter & synchronous detector 12 and then is VSB filtered. Then, the frequency and phase of the signal is locked by the assistance of the pilot.

The signal output from IF filter & synchronous detector 12 is detected in NTSC rejection filter 14 in accordance with the training sequence of the data field sync, whether it has a co-channel NTSC interference or not. If the signal has the co-channel NTSC interference, NTSC rejection filtering is performed. If not, a by-pass occurs.

Ghost of the signal output from NTSC rejection filter 14 is removed in equalizer 16, and the phase error thereof is corrected in phase tracker 16 to then be input to Trellis decoder 17.

The signal output from phase tracker 16 is detected using the different Viterbi decoders from each other for two cases of using NTSC rejection filter in Trellis decoder 17 and not using the same. The signal is deinterleaved to separate the burst error from data interleaver 18 and the error thereof is corrected in R-S decoder 19. Finally, the reception is completed via data derandomizer 20.

Here, the operation of Trellis decoder 17 will be in more detail described.

In general, if a NTSC broadcasting station of the same channel is located in the adjacent area of a HDTV broadcasting station, the same channel NTSC interference occurs. If the same channel NTSC interference occurs, a NTSC rejection filter is adopted in order to remove the same channel NTSC interference.

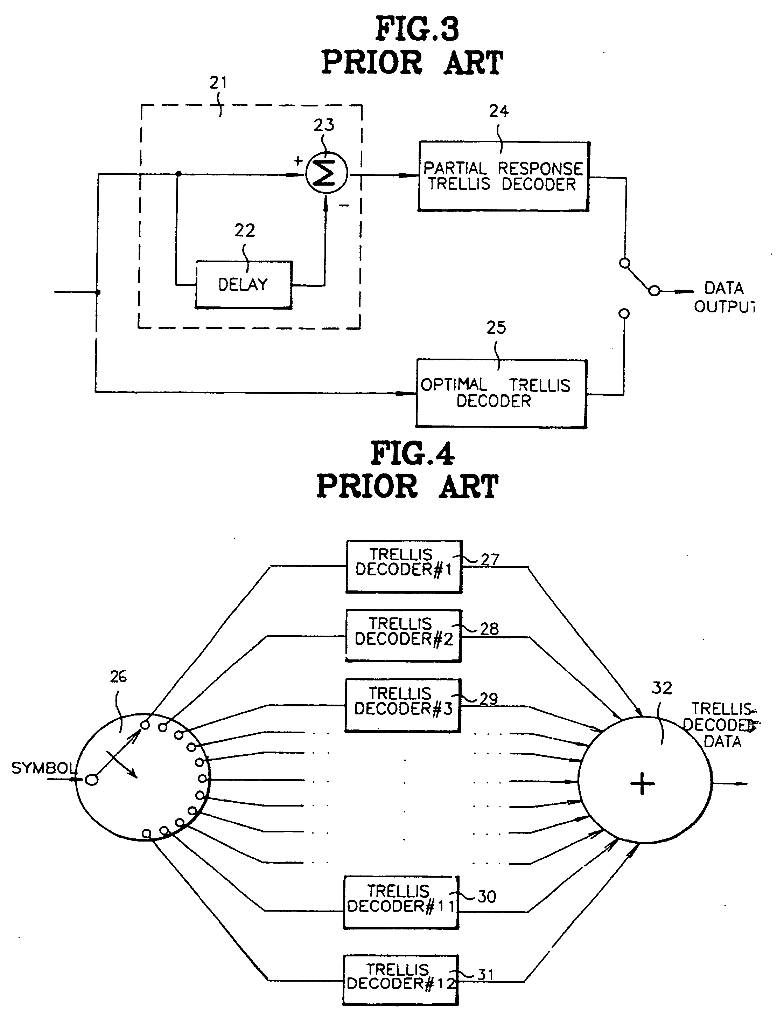

FIG.3 is a detailed diagram showing the combination of the conventional NTSC rejection filter 14 and Trellis decoder 17. FIG.4 is a detailed diagram showing the combination of the conventional Trellis decoder 17 and data deinterleaver 18.

If a NTSC interference occurs because of a NTSC broadcasting station of the same channel being located in the adjacent area of a HDTV broadcasting station, NTSC rejection filter 21 having a delay 22 and a subtractor 23 is adopted, as shown in FIG.3. If the signal passes through NTSC rejection filter 21, the signal also passes through an 8 state partial response decoder 24. If the signal does not pass through NTSC rejection filter 21, the signal passes through a 4 state optimal Trellis decoder 25.

FIG.4 shows that partial response decoder 14 is actually composed of 12 Trellis decoders 27 to 31. A first Trellis decoder 27 receives and decodes first, 13th, 25th, 37th,... symbols among input signals. A second Trellis decoder 27 receives and decodes second, 14th, 26th, 38th,... symbols among input signals.

Finally, the signals are demultiplexed in a switch 26 in the unit of 12 symbols and is multiplexed again in another switch 32m thereby deinterleaving data in the unit of 12 symbols to be output.

However, since the transmission and reception apparatus for a HDTV does not have the specific and detailed construction for Trellis encoder and Trellis decoder, constructing the transmission and reception apparatus for a HDTV is difficult to accomplish.

The prior art document EP-A-0 525 641 shows improving data transmission rates on a digital channel by combining QAM and QPSK modulation using a Frellis coder /decoder.

### Summary of the Invention

In order to address the above problem, it is an object for particular embodiments of the present invention to provide a partial response Trellis decoder having a specific and detailed configuration as set out in claim 1.

### Brief Description of the Drawings

The objects and advantages of the present invention will become more apparent by describing in detail a preferred embodiment thereof with reference to the attached drawings in which:
FIG.1 is a schematic view of the transmission side of a general HDTV;
FIG.2 is a schematic view of the reception side of a general HDTV;
FIG.3 is a detailed schematic view showing the combination of a conventional NTSC rejection filter and Trellis decoder;
FIG.4 is a detailed schematic view showing the combination of a conventional Trellis decoder and data deinterleaver;
FIG.5 is a schematic view of a general Trellis encoder;
FIG.6 is a schematic view of a Trellis encoder in accordance with a first embodiment of the present invention;
FIG.7 is a diagram for explaining the operation of the TCM mapper shown in FIG.5;
FIG.8 is a diagram for explaining the signal levels of the post-comb filter shown in FIG.6;
FIG.9 is a diagram for explaining the ruler type slicer shown in FIG.6;
FIG.10 is a schematic view of the partial response Trellis decoder according to another embodiment of the present invention;
FIG.11 is a schematic view of the partial response Trellis decoder according to still another embodiment of the present invention;
FIG.12 is a detailed schematic diagram of the Viterbi decoder shown in FIG.11; and
FIG.13 is a diagram for explaining the operation of the Viterbi decoder shown in FIG.12.

### Detailed Description of the Invention

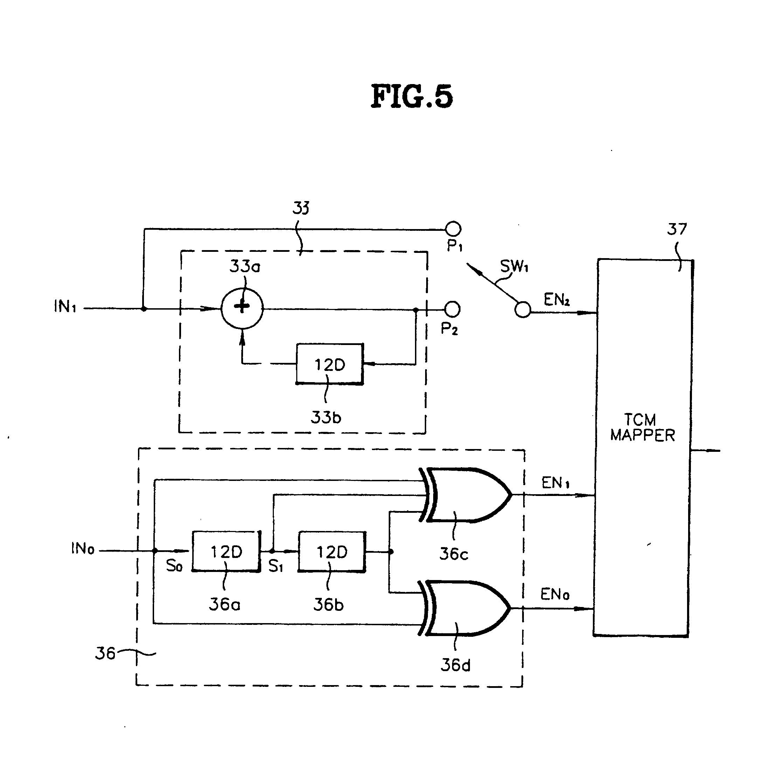

As shown in FIG.5, a general Trellis encoder is constituted by a precoder 33 for precoding a most significant one bit output from data interleaver, a switch SW₁ for selecting a most significant one bit output from data interleaver if there is no NTSC interference or selecting the signal selected from the precoder 33 if there is an NTSC interference, a convolutional encoder 36 for convolutionally coding a least significant one bit output from data interleaver and outputting the same as two bits, and a TCM mapper 37 for receiving a signal of three bits output from the switch SW₁ and convolutional encoder 36 and for outputting the corresponding voltage levels for the respective cases. The general Trellis encoder outputs a most significant one bit to the TCM mapper 37 immediately without coding the same if the two bit signal output from the data interleaver is input, and makes a least bit one bit signal into a two bit signal via the convolutional encoder 36 to then output to the TCM mapper 37, thereby performing a TCM mapping.

Here, the precoder 33 is constituted by a delay 33b for delaying the signal output from the data interleaver by 12 symbols and an adder 33a for adding the signal output from the delay 33b and the signal from the data interleaver and outputting the added signal. Also, the convolutional encoder 36 is constituted by a delay 36a for primarily delaying the least significant one bit output from the data interleaver by 12 symbols, a delay 36b for secondarily delaying the signal output from the delay 36a by 12 symbols, a first exclusive OR gate 36c for performing an exclusive OR operation with respect to the signal S₀ currently being output from the data interleaver, the signal S₁ output from the delay 36a and the signal S₂ output from the delay 36b and for outputting the resultant one bit signal EN₁ to the TCM mapper 37, and a second exclusive OR gate 36d for performing an exclusive OR operation with respect to the signal S₀ currently being output from the data interleaver and the signal S₂ output from the delay 36b and for outputting the resultant one bit signal EN₀ to the TCM mapper 37.

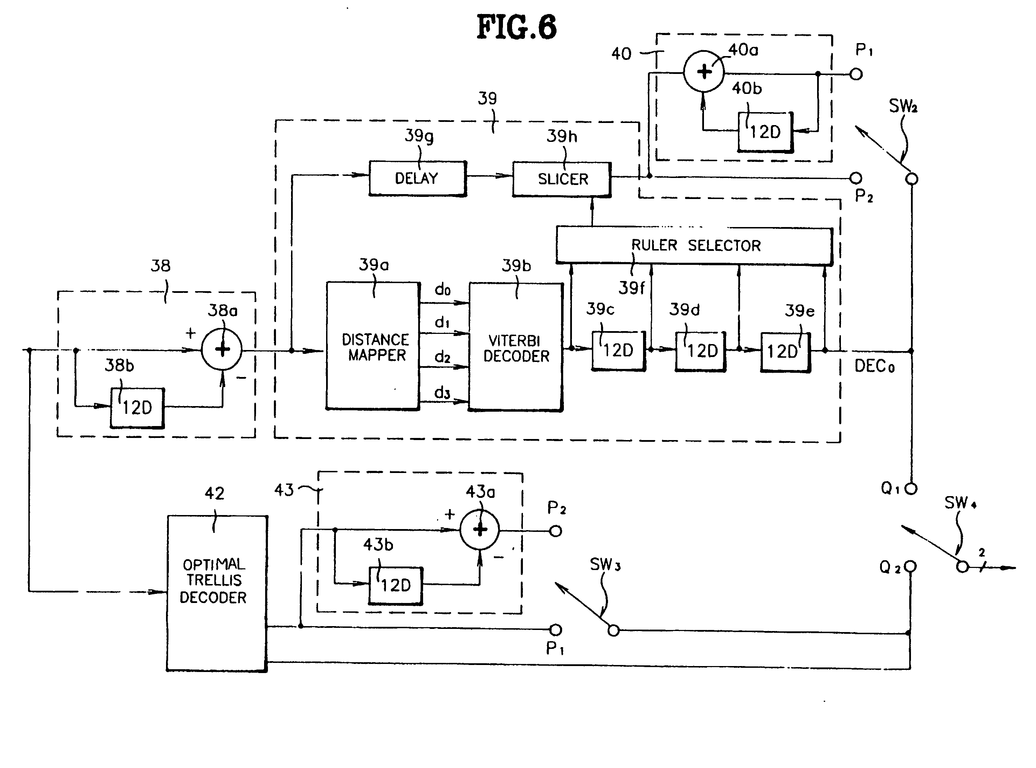

As shown in FIG. 6, the Trellis decoder in accordance with a first embodiment of the present invention is constituted by a post comb filter 38 for filtering an NTSC broadcasting signal band in the case of using an NTSC rejection filter because of an NTSC interference, a partial response Trellis decoder 39 for decoding an original data from the signal output from the post post comb filter 38, a precoder 40 for precoding the signal output from the partial response Trellis decoder 39, a switch SW₂ for selecting and outputting either signal output from the partial response Trellis decoder 39 and precoder 40, a four state optimal Trellis decoder 42 which operates if there is no NTSC interference, a postcoder 43 for postcoding the signal output from the four state optimal Trellis decoder 42, a switch SW₃ for selecting and outputting either signal output from the four state optimal Trellis decoder 42 and postcoder 43, and a switch SW₄ for selecting and outputting either signal output from the switch SW₂ and partial response Trellis decoder 39, or from the four state optimal Trellis decoder 42 and switch SW3, depending on the presence or absence of the NTSC interference.

In the Trellis decoder having the aforementioned configuration, as described in FIG.3, if a NTSC broadcasting station of the same channel is located in the adjacent area of a HDTV broadcasting station, the same channel NTSC interference occurs. Therefore, the operation of the Trellis decoder is selectively determined depending on the presence or absence of the NTSC broadcasting station of the same channel. Accordingly, the cases are classified into two; one is the case when an NTSC rejection filter is used and the other is the case when an NTSC rejection filter is not used, which is selected by a switch SW₄.

When an NTSC rejection filter is not used, an optimal Trellis decoder 42 is used. A four state Viterbi decoder is adopted as the optimal Trellis decoder 42 to decode the two bits IN1 and IN0 prior to being convolutionally coded in the Trellis encoder and outputs the decoded signals DEC₁ and DEC₀.

Here, the post-comb filter 38 and post coder 43 are constituted by a delay 38b for delaying the input value by 12 symbols and a subtractor 38a for obtaining the difference between the signal delayed by the delay 38b and the currently input value. Also, the precoder 40 is constituted by an adder 40a for adding the signals output from the partial response Trellis decoder 39 and delay 38b for delaying the signal output from the adder 40a by 12 symbols and outputting to the adder 40a.

The operation of the Trellis encoder and decoder having the aforementioned configuration will now be described.

First, in the Trellis encoder, if two bit input is received, the most significant one bit IN₁ is applied to the TCM mapper 37 immediately as an uncoded bit and the least significant one bit becomes two bits via the convolutional encoder 36 to then be applied to the TCM mapper 37.

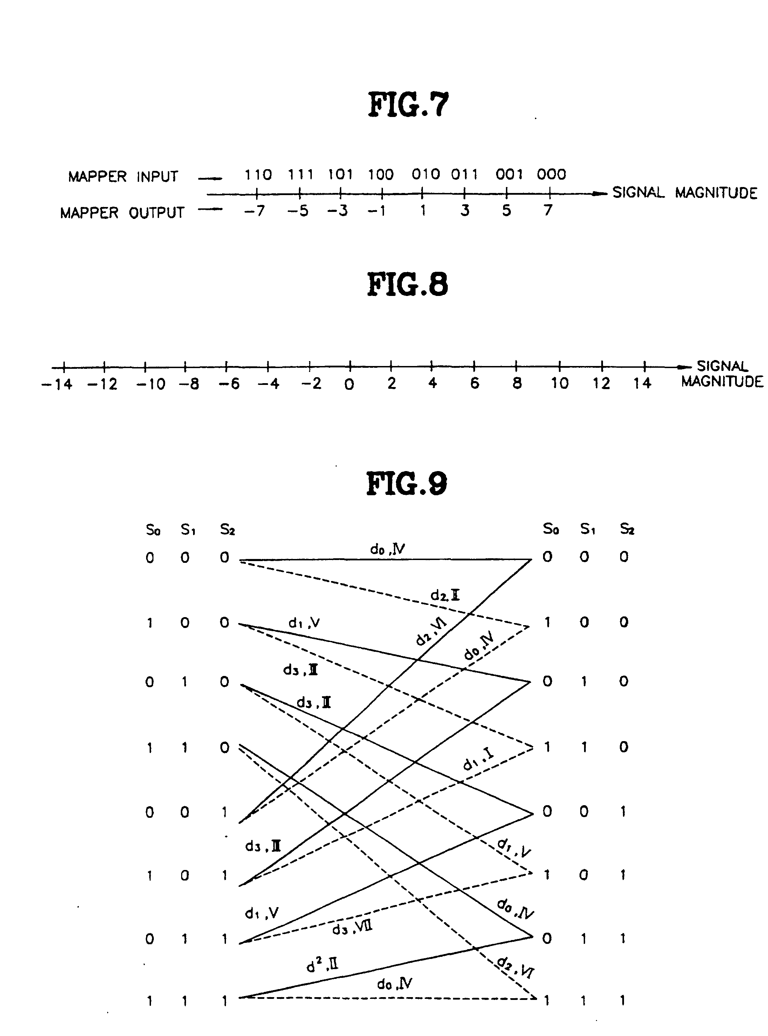

Here, in explaining the operations of the Trellis encoder and decoder, it is assumed that the switches SW₁, SW₂ and SW₃ shown in FIGs.5 and 6 are all connected to a port P₁. The convolutional encoder 36 having delays 36a and 36b produces a four state Trellis diagram, where EN₁ is obtained by performing an exclusive OR operation with respect to the signals S₀, S₁ and S₂ and EN₀ is obtained by performing an exclusive OR operation with respect to the signals S₀ and S₂. Therefore, the equation of EN₁ and EN₀ is only an example. Although this equation is changed, the block diagram of the partial response Trellis decoder 39 is not changed, but the Euclidean distances d₀, d₁, d₂ and d₃ obtained by the distance mapper 39a are only changed. Thus, the TCM mapper 37 receives three bits EN₂, EN₁ and EN₀ and outputs the voltage level corresponding to the respective cases, as shown in FIG.7.

The signal magnitudes shown in FIG.7 is not absolute values but relative values. For example, if three bits EN₂, EN₁ and EN₀ are '011', the voltage of 3V is output.

Also, the mapping method described in FIG.7 may be changed. However, even if the method is changed, the block diagram of the partial response Trellis decoder is not changed but the Euclidian distances d₀, d₁, d₂ and d₃ obtained by the distance mapper 39a are only changed.

Meanwhile, the described Trellis decoder may or may not adopt an NTSC rejection filter. That is to say, if a NTSC broadcasting station of the same channel is located in the adjacent area of a HDTV broadcasting station, the NTSC rejection filter is used. If not, the NTSC rejection filter is not used. This is selected by a switch SW₄.

In case a NTSC broadcasting station of the same channel is not located in the adjacent area of a HDTV broadcasting station, if the switch SW₄ selects a point Q₁, the optimal Trellis decoder 42 decodes the two bit signal IN₁ and IN₀ input to the Trellis encoder by using the four state Viterbi decoder to then output the decoded signal DEC₁ and DEC₀.

Also, if a NTSC broadcasting station of the same channel is not located in the adjacent area of a HDTV broadcasting station, the switch SW₄ selects a point Q₁. At this time, the partial response Trellis decoder 39 operates to decode with the Trellis encoder (FIG.5) and post-comb filter 38 regarded as one encoder.

This will now be described in detail.

First, in order to filter the noise of the NTSC broadcasting signal which may be loaded on 8 level signal output from the TCM mapper 37 of the Trellis encoder, 15 level signal is output to the post-comb filter 38, as shown in FIG.8. The signal output from the partial response Trellis decoder 39 is decoded into the original data and is selected in the switch SW₄ to then be output.

Here, the construction and operation of the partial response Trellis decoder 39 according to an embodiment of the present invention will be described in detail.

The partial response Trellis decoder 39 according to an embodiment of the present invention is constituted by a distance mapper 39a, a Viterbi decoder 39b, delays 39c, 39d and 39e, a ruler selector 39f and a slicer 39h, and performs a slicing operation depending on the selected ruler types to then output the sliced results.

The distance mapper 39a calculates Euclidean distances d₀, d₁, d₂ and d₃ using the signals input from the post-comb filter 38 after the NTSC interference is removed therefrom.

Here, as shown in Table 1, the distance mapper 39a obtains a first Euclidean distance d₀, using the distance between the input signal after the NTSC interference is removed therefrom and the closest point among '0, 8, -8,' a second Euclidean distance d₁, using the distance between the input signal after the NTSC interference is removed therefrom and the closest point among '2, 10, -6, -14,' a third Euclidean distance d₂, using the distance between the input signal after the NTSC interference is removed therefrom and the closest point among '4, 12, -4, -12' and a fourth Euclidean distance d₃, using the distance between the input signal after the NTSC interference is removed therefrom and the closest point among '6, 14, -2, -10,'.

The Viterbi decoder 39b 8 state Viterbi-decodes the Euclidean distances d₀, d₁, d₂ and d₃ output from the distance mapper 39a.

The delay means is constituted by a first delay 39c for delaying the data output from the Viterbi decoder 39b by 12 symbols to then output to the ruler selector 39f, a second delay 39d for delaying the data output from the first delay 39c by 12 symbols to then output to the ruler selector 39f, and a third delay 39e for delaying the data output from the second delay 39d by 12 symbols to then output the decoded signal DEC₀ obtained by decoding the least significant one bit IN₀ prior to being convolutionally coded, to the switch SW₄ and ruler selector 39f. The data output from the Viterbi decoder 39b is delayed in three steps as mentioned above to then output the current state and next state thereof to the ruler selector 39f.

The ruler selector 39f selects seven ruler types I, II, III, IV, V, VI and VII depending on the signals output from the delay means. That is to say, as shown in FIG.9, the ruler selector 39f selects a ruler type IV if the signal output from the delay means is turned from a current state '000' into a next state '000,' a ruler type II if the signal output from the delay means is turned from a current state '000' into a next state '100,' a ruler type V if the signal output from the delay means is turned from a current state '100' into a next state '010,' a ruler type III if the signal output from the delay means is turned from a current state '100' into a next state '110,' a ruler type III if the signal output from the delay means is turned from a current state '010' into a next state '101,' a ruler type V if the signal output from the delay means is turned from a current state '010' into a next state '101,' a ruler type IV if the signal output from the delay means is turned from a current state '110' into a next state '011,' a ruler type VI if the signal output from the delay means is turned from a current state '110' into a next state '111,' a ruler type VI if the signal output from the delay means is turned from a current state '001' into a next state '100,' a ruler type III if the signal output from the delay means is turned from a current state '101' into a next state '010,' a ruler type I if the signal output from the delay means is turned from a current state '101' into a next state '110,' a ruler type V if the signal output from the delay means is turned from a current state '011' into a next state '001,' a ruler type VII if the signal output from the delay means is turned from a current state '011' into a next state '101,' a ruler type II if the signal output from the delay means is turned from a current state '111' into a next state '011,' and a ruler type IV if the signal output from the delay means is turned from a current state '111' into a next state '111.'

The delay 39g delays the input signal after the NTSC interference is removed therefrom for a constant time in order to synchronize with the ruler type selection of the ruler selector 39f.

The slicer 39h slices depending on the ruler types selected by the ruler selector 39f depending on the signal delayed by the delay 39g after the NTSC interference is removed therefrom and the signal delayed by the delay 39g to then output the decoded signal DEC₁ of the most significant bit IN₁. That is to say, the slicer 39h outputs '1' if the input signal is close to -14 or 2 and '0' if the input signal is close to -6, for the first ruler type I, outputs '1' if the input signal is close to -12 or 4 and '0' if the input signal is close to -4, for the second ruler type II, outputs '1' if the input signal is close to -10 or 6 and '0' if the input signal is close to -2, for the third ruler type III, outputs '1' if the input signal is close to -8 or 8 and '0' if the input signal is close to 0, for the fourth ruler type IV, outputs '1' if the input signal is close to -6 or 10 and '0' if the input signal is close to 2, for the fifth ruler type V, outputs '1' if the input signal is close to -4 or 12 and '0' if the input signal is close to 4, for the sixth ruler type VI, or outputs '1' if the input signal is close to 14 or -2 and '0' if the input signal is close to 6, for the seventh ruler type VII.

The operation of the partial response Trellis decoder having the aforementioned configuration will now be described.

When the signal output from the post-comb filter 38 is output as a 15 level signal, if there is a noise, exact values as shown in FIG.8, cannot be obtained. That is to say, values other than -14, -12, -10,..., 10, 12, 14, may be obtained.

However, although the values output from the post-comb filter 38 become any other than those shown in FIG.8, the partial response Trellis decoder 39 should decode the values.

Therefore, even if the exact values are not obtained due to the noise, in order to decode the values, the distance mapper 39a of the partial response Trellis decoder 39 obtains the Euclidean distances d₀, d₁, d₂ and d₃. At this time, the method for obtaining the Euclidean distances d₀, d₁, d₂ and d₃ in the distance mapper 39a will now be described with reference to Table 1.

In the case when the signal which is output from the post-comb filter 38 and is then input to the distance mapper 39a is 0.5 in magnitude, the Euclidean distances d₀, d₁, d₂ and d₃ are obtained in the following manner.

Here, d₀ represents the distance between the input signal and the closest point among '0, 8, -8'. Therefore, when the magnitude of the input signal is 0.5, the signal is closest to 0, and the distance therebetween is 0.5. Also, since d₁ represents the distance between the input signal and the closest point among '2, 10, -6, -14,' when the magnitude of the input signal is 0.5, the signal is closest to 2, and the distance therebetween is 1.5. The Euclidean distance d₂ is closest to 4 and the distance therebetween is 3.5, and d₃ is closest to -2 and the distance therebetween is 2.5.

Therefore, the values of the Euclidean distances d₀, d₁, d₂ and d₃ are 0.5, 1.5, 3.5 and 2.5, respectively.

The thus obtained and output values from the distance mapper 39a are input to the Viterbi decoder 39b to then be decoded. That is to say, the Euclidean distances to be used for each transition are one among d₀, d₁, d₂ and d₃ and the used Euclidean distances d₀, d₁, d₂ and d₃ are decoded by means of the 8-state Trellis diagram shown in FIG.8, to thereafter be output bit by bit. The one output bit DEC₀ corresponds to the lower one bit IN₀ among two bit data input from the Trellis encoder.

Also, the one bit output from the Viterbi decoder 39b is output via three sequential delays 39c, 39d and 39e. The data each delayed in the delays 39c, 39d and 39e form a current state and the inputs of the delays 39c, 39d and 39e form a next state, as shown in FIG.9.

The signals output from the delays 39c, 39d and 39e are input to the ruler selector 39f as the current state or next state. It can be known along which path the transition is performed in accordance with the Trellis diagram shown in FIG.9.

In FIG.9 showing the transition from the current state into the next state, solid lines represent that the next signal is 0, and dot lines represent that the next signal is 1.

The ruler selector 39f selects one of ruler types I, II, III, IV, V, VI and VII in accordance with the corresponding path. That is to say, in case of the transition from a current state 000 into a next state 100, the ruler selector 39f selects ruler type II.

Here, the process for selecting the ruler type is performed by the counter-operation of the Trellis encoder shown in FIG.5, which will now be described.

In the Trellis encoder, if the signals S₀, S₁ and S₂ are '000,' the output EN₁ of the exclusive OR gate 36c becomes '0' and the output EN₀ of the exclusive OR gate 36d becomes '0'. At this time, if the output signal EN2 of the precoder 33 is '0,' the input of the TCM mapper 37 becomes '000' and the output becomes 7V as shown in FIG.7. If the input signal IN₀ newly input to the convolutional encoder 36 is '1,' S₀, S₁ and S₂ become '100,' the output EN₁ of the exclusive OR gate 36c becomes '1' and the output EN₀ of the exclusive OR gate 36d becomes '1'. At this time, if the output signal EN₂ of the precoder 33 is '0,' the output of the TCM mapper 37 becomes 3V. In this case, since the value of the delay 38b is 7V and the currently input value is 3V, the output of the post-comb filter 38 becomes -4V.

If the output signal EN₂ of the precoder 33 is '1,' the output of the TCM mapper 37 becomes -5V. At this time, the output of the post-comb filter 38 becomes -12V.

To summarize, at the time of transition from the current state '000' into the next state '110' as shown in FIG.9, if there is no change in the value of the output signal EN₂ of the precoder 33, the output of the post-comb filter 38 becomes -4V. If there is a change in the value of the output signal EN₂ of the precoder 33, i.e., a change from '0' into '1' or a change from '1' into '0,' the output of the post-comb filter 38 becomes -12 or 4V, thereby selecting the ruler type II in Table 2 and utilizing the difference value between the voltage -12V, 4V and -4V to be input when there is no error and the practically input signal, after obtaining the Euclidean distance d₂ in Table 1.

If the output of the post-comb filter 38 is applied to the distance mapper 39a and is applied to the slicer 39h via the delay 39g at the same time, the slicer 39h slices the applied values in accordance with the ruler type selected by the ruler selector 39f, as shown in Table 2, to then output signal of '0' or '1'.

For example, if the signal output from the post-comb filter 38 is 0.5 and the ruler selector 39f selects the ruler type II when the signal is input to the slicer 39h, the slicer 39h compares the input signal whose magnitude is 0.5. That is to say, when the input signal is compared with the value of the selected ruler type, the data value of the closest value is output, where the input signals -12, -4 and 4 are compared by the ruler type II. Here, since the input signal is 0.5, 4 is the closest value. Therefore, the slicer 39h outputs '1'.

The thus decoded value DEC₁ from the slicer 39h is encoded in the Trellis encoder to immediately be input to the TCM mapper, which is one bit input signal IN₁.

In this manner, the value of the lower one bits IN₀ of the Trellis encoder is decoded via the distance mapper 39a, Viterbi decoder 39b and delays 39c, 39d and 39e to then be output as a decoded value DEC₀. The path is known by setting the output signal and input signal as the current state and next state, respectively, as shown in FIG.9. The ruler type is selected by the corresponding path known by the ruler selector 39f. The input signals are compared with the values of the ruler type selected by the ruler selector 39f, in the slicer 39h, so that the slicer 39h decodes the one bit data corresponding to the closest value into the data corresponding to the upper one bit IN₂ of the Trellis encoder to then output the decoded data DEC₁.

The switches SW₁, SW₂ and SW₃ shown in FIGs.5 and 6 will now be described. If the precoder 33 (FIG.5) is not dropped by in the Trellis encoder, it is switched so that the precoder 40 is dropped by from the partial response Trellis decoder 39 and that the postcoder 43 is not. dropped by from the optimal Trellis decoder 42, as shown in FIG.6.

Reversely, if the precoder 33 is dropped by in the Trellis encoder, it is switched so that the precoder 40 is not dropped by from the partial response Trellis decoder 39 and that the postcoder 43 is dropped by from the optimal Trellis decoder 42.

That is to say, in case when the signal having passed through the precoder 33 in the Trellis coder is selected, the switch SW₂ does not select the precoder and the switch SW₃ switches so as to pass through the postcoder 43, thereby preventing the increase in errors.

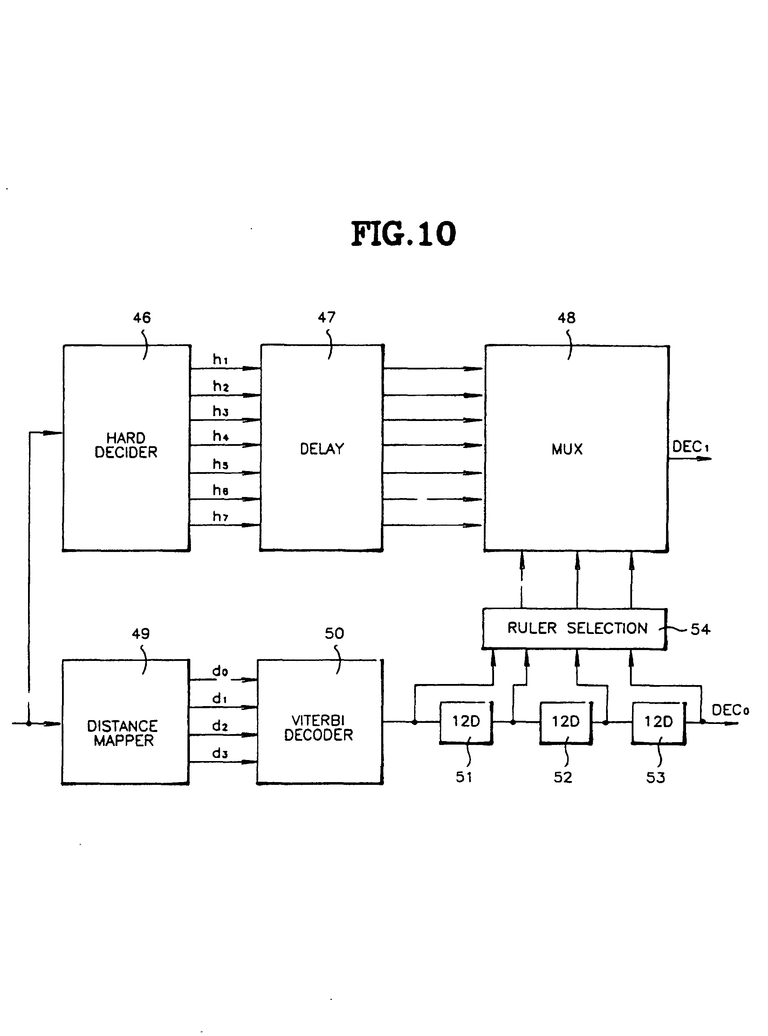

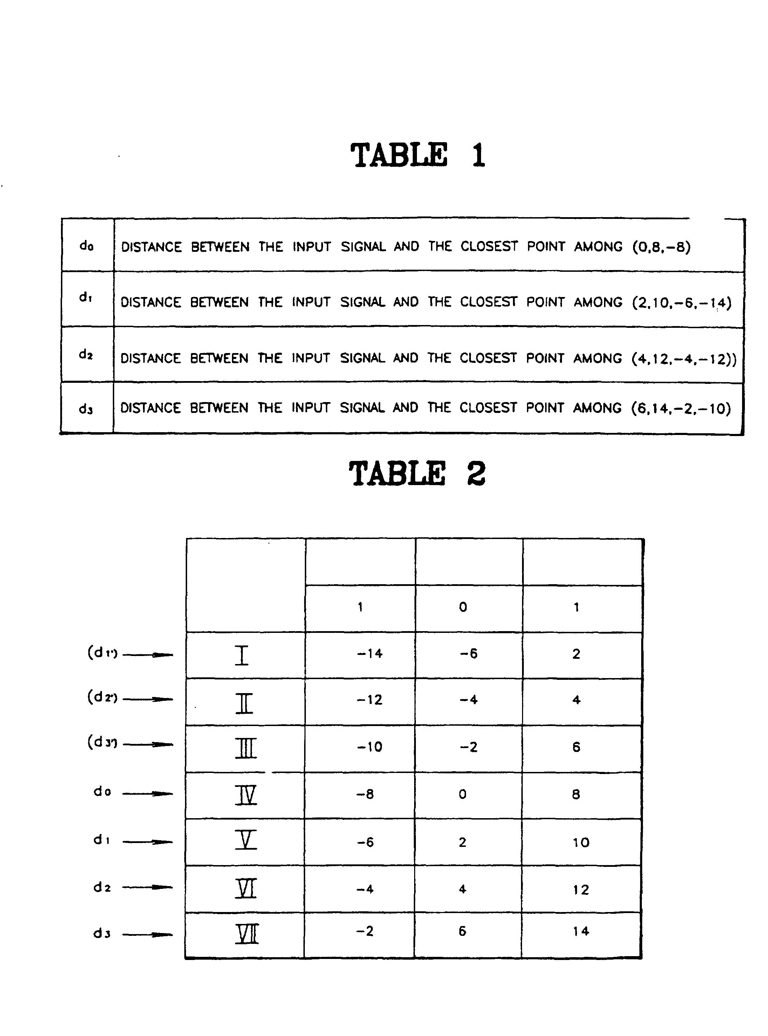

Meanwhile, as shown in FIG.10, the partial response Trellis decoder according to another embodiment of the present invention is constituted by a distance mapper 49, a Viterbi decoder 50, delays 47, 51, 52 and 53, a ruler selector 54, a hard decider 46 and a multiplexer 48, and slices all cases with respect to all selected ruler types to then selectively output one of the sliced results. The functions of the distance mapper 49, Viterbi decoder 50, delays 47, 51, 52 and 53 and ruler selector 54 are the same as those of the partial response Trellis decoder according to the embodiment shown in FIG.6.

The distance mapper 49 calculates Euclidean distances d₀, d₁, d₂ and d₃ from the input signals from which the NTSC interference is removed.

Here, as shown in Table 1, like the distance mapper 39a shown in FIG.6, the distance mapper 49 obtains Euclidean distance d₀, using the distance between the input signal after the NTSC interference is removed therefrom and the closest point among '0, 8, -8,' Euclidean distance d₁, using the distance between the input signal after the NTSC interference is removed therefrom and the closest point among '2, 10, -6, -14,' Euclidean distance d₂, using the distance between the input signal after the NTSC interference is removed therefrom and the closest point among '4, 12, -4, -12' and Euclidean distance d₃, using the distance between the input signal after the NTSC interference is removed therefrom and the closest point among '6, 14, -2, -10'.

The Viterbi decoder 50 8 state Viterbi-decodes the Euclidean distances d₀, d₁, d₂ and d₃ output from the distance mapper 49.

The delay means is constituted by a delay 51 for delaying the data output from the Viterbi decoder 50 by 12 symbols to then output to the ruler selector 54, a delay 52 for delaying the data output from the delay 51 by 12 symbols to then output to the ruler selector 54, and a delay 53 for delaying the data output from the delay 52 by 12 symbols to then output to the ruler selector 54. The data output from the Viterbi decoder 50 is delayed in three steps as mentioned above to then output the current state and next state thereof to the ruler selector 54.

The ruler selector 54 selects seven ruler types I, II, III, IV, V, VI and VII depending on the signals output from the delay means. That is to say, as shown in FIG.9, the ruler selector 54 selects a ruler type IV if the signal output from the delay means is turned from a current state '000' into a next state '000,' a ruler type II if the signal output from the delay means is turned from a current state '000' into a next state '100,' a ruler type V if the signal output from the delay means is turned from a current state '100' into a next state '010,' a ruler type III if the signal output from the delay means is turned from a current state '100' into a next state '110,' a ruler type III if the signal output from the delay means is turned from a current state '010' into a next state '101,' a ruler type V if the signal output from the delay means is turned from a current state '010' into a next state '101,' a ruler type IV if the signal output from the delay means is turned from a current state '110' into a next state '011,' a ruler type VI if the signal output from the delay means is turned from a current state '110' into a next state '111,' a ruler type VI if the signal output from the delay means is turned from a current state '001' into a next state '100,' a ruler type III if the signal output from the delay means is turned from a current state '101' into a next state '010,' a ruler type I if the signal output from the delay means is turned from a current state '101' into a next state '110,' a ruler type V if the signal output from the delay means is turned from a current state '011' into a next state '001,' a ruler type VII if the signal output from the delay means is turned from a current state '011' into a next state '101,' a ruler type II if the signal output from the delay means is turned from a current state '111' into a next state '011,' and a ruler type IV if the signal output from the delay means is turned from a current state '111' into a next state '111.'

The hard decider 46 slices the input signals from which the NTSC interference is removed, respectively to then be hard decided. That is to say, the hard decider 46 slices and hard decides the input signals in accordance with seven ruler types shown in Table 2. In other words, the hard decider 46 outputs '1' if the input signal is close to -14 or 2 and '0' if the input signal is close to -6, outputs '1' if the input signal is close to -12 or 4 and '0' if the input signal is close to -4, outputs '1' if the input signal is close to -10 or 6 and '0' if the input signal is close to -2, outputs '1' if the input signal is close to -8 or 8 and '0' if the input signal is close to 0, outputs '1' if the input signal is close to -6 or 10 and '0' if the input signal is close to 2, outputs '1' if the input signal is close to -4 or 12 and '0' if the input signal is close to 4, or outputs '1' if the input signal is close to 14 or -2 and '0' if the input signal is close to 6. In FIG.10, hᵢ (h₁ to h₇) are the values output when the input signals are sliced depending on the ith ruler type.

The delay 47 delays the signal output from the hard decider 46 for a constant time in order to synchronize with the ruler selector 54 and outputs the delayed signal to the multiplexer 48.

The multiplexer 48 selects and outputs one of the signals output from the hard decider 46 in accordance with the ruler type selected by the ruler selector 54. That is to say, the mmultiplexer 48 selects and outputs signals matching with the ruler type selected by the ruler selector 54 among the signals delayed by the delay means 47 while Viterbi decoding.

The operation of the partial response Trellis decoder according to another embodiment of the present invention having the aforementioned configuration will now be described in detail.

As shown in Table 1, the Euclidean distances d₀, d₁, d₂ and d₃ are obtained from the input signals from which the NTSC interference is removed in the distance mapper 49 and are Viterbi decoded in the Viterbi decoder 50.

The data output from the Viterbi decoder 50 is delayed in three steps through the delays 51, 52 and 53 and is output to the ruler selector 54. The ruler selector 54 selects a ruler type depending on the signals output from the delays 51, 52 and 53 as shown in FIG.9.

Also, the input signals from which the NTSC interference is removed in the distance mapper 49 are sliced and are hard decided in the hard decider 46, respectively, as shown in Table 2. One of the signals output from the hard decider 46 is selected depending on the ruler type to then be output. In other words, the lower one bit IN₀ of the Trellis encoder is decoded to then output the decoded signal DEC₀ through the distance mapper 49 and Viterbi decoder 50, and the upper one bit IN₁ of the Trellis encoder is decoded to then output the decoded signal DEC₁ through the hard decider 46, relay 47 and multiplexer 48.

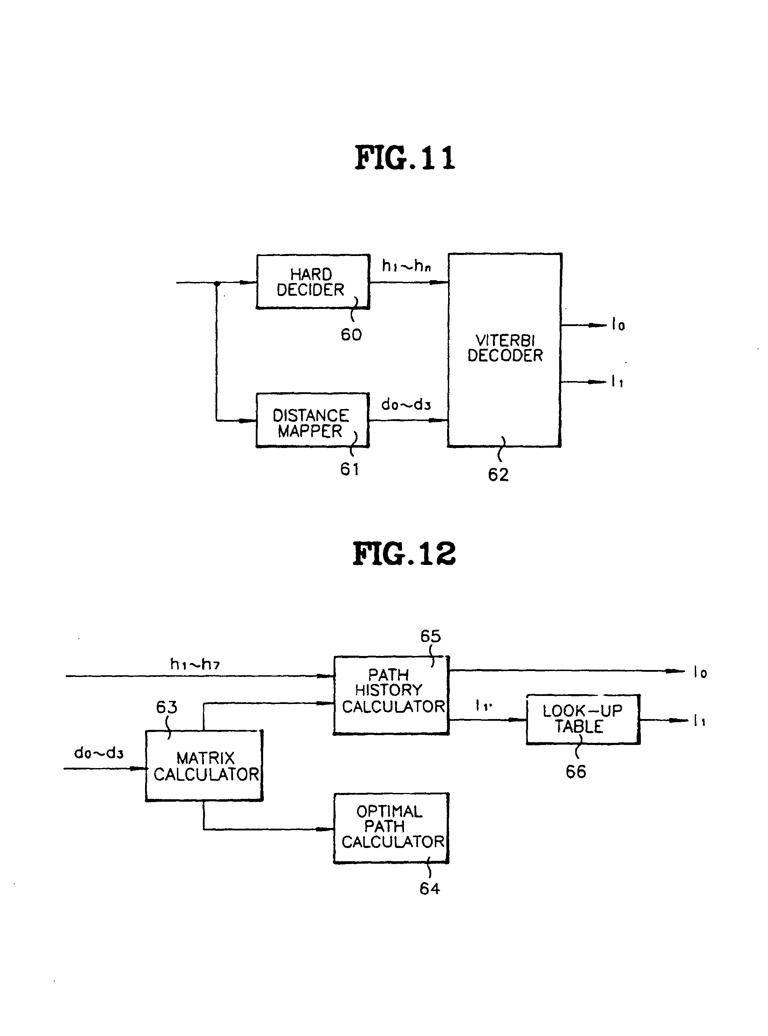

As shown in FIG.11, the partial response Trellis decoder according to still another embodiment of the present invention is constituted by a distance mapper 61, a hard decider 60 and a Viterbi decoder 62.

The distance mapper 61 calculates Euclidean distances d₀, d₁, d₂ and d₃ from the input signals from which the NTSC interference is removed, as shown in Table 1.

That is to say, the distance mapper 61 obtains a first Euclidean distance d₀, using the distance between the input signal after the NTSC interference is removed therefrom and the closest point among '0, 8, -8,' a second Euclidean distance d₁, using the distance between the input signal after the NTSC interference is removed therefrom and the closest point among '2, 10, -6, -14,' a third Euclidean distance d₂, using the distance between the input signal after the NTSC interference is removed therefrom and the closest point among '4, 12, -4, -12' and a fourth Euclidean distance d₃, using the distance between the input signal after the NTSC interference is removed therefrom and the closest point among '6, 14, -2, -10,'.

The hard decider 60 hard decides the signal output after the NTSC interference is removed therefrom and outputs hard decision values h₁ to h₇. That is to say, as shown in Table 2, the hard decider 60 outputs '1' if the input signal is close to -14 or 2 and '0' as a hard decision value h₁ if the input signal is close to -6, outputs '1' if the input signal is close to -12 or 4 and '0' as a hard decision value h₂ if the input signal is close to -4, outputs '1' if the input signal is close to -10 or 6 and '0' as a hard decision value h₃ if the input signal is close to -2, outputs '1' if the input signal is close to -8 or 8 and '0' as a hard decision value h₄ if the input signal is close to 0, outputs '1' if the input signal is close to -6 or 10 and '0' as a hard decision value h₅ if the input signal is close to 2, outputs '1' if the input signal is close to -4 or 12 and '0' as a hard decision value h₆ if the input signal is close to 4, or outputs '1' if the input signal is close to 14 or -2 and '0' as a hard decision value h₇ if the input signal is close to 6.

As shown in FIG.12, the Viterbi decoder 62 is constituted by a matrix calculator 63 for obtaining the difference between the Euclidean distances d₀, d₁, d₂ and d₃ and the branches of the respective states and then calculating the survival path and the accumulative matrix value by adding the difference value with the accumulative previous distance value, an optimal path calculator 64 for obtaining the optimal path being within the view area from the accumulative matrix value output from the matrix calculator 63 , a path history calculator 65 for directly outputting the upper one bit value using a hard decision values h₁ to h₇ output from the hard decider 60, survival path output from the matrix calculator 63 and optimal path output from the optimal path calculator 64 and for selecting a selection signal for selecting the lower one bit, and a look-up table 66 for outputting the lower one bit depending on the selection signal output from the path history calculator 65. The Viterbi decoder 62 Viterbi decodes the data output from the distance mapper 61 and hard decider 60.

The operation of the partial response Trellis decoder according to another embodiment of the present invention having the aforementioned configuration.

The distance mapper 61 calculates and outputs the Euclidean distances d₀, d₁, d₂ and d₃ depending on the signal output after the NTSC interference is removed therefrom a post-comb filter. the upper one bit is compared with the previous data depending on the signal output after the NTSC interference is removed therefrom a post-comb filter. The information whether they are same or different is represented as the respective sets, I, II, III, IV, V, VI and VII.

The Euclidean distances d₀, d₁, d₂ and d₃ and the set values h1 to h7 of the hard decider 60 are Viterbi decoded by the Viterbi decoder 62 to then output the original two bits I₀ and I₁ having input to the Trellis encoder.

Here, the operation of the Viterbi decoder 63 will be described.

The Euclidean distances d₀, d₁, d₂ and d₃ are used in obtaining the difference between the Euclidean distances d₀, d₁, d₂ and d₃ and the branches of the respective states in the matrix calculator 63, and the obtained values are added with the previous distance values to then be calculated and output as the survival paths and accumulative matrix values. The accumulative matrix values of the matrix calculator 63 are used in obtaining the optimal path within the view area in the optimal path calculator 64.

The outputs h₁ to h₇ of the hard decider 60, survival paths output from the matrix calculator 63 and the states of the optimal paths are used in obtaining the values to be output from the optimal path selected by the path history calculator 65. The lower one bit I₁ having been input to the Trellis encoder in accordance with the signal output from the path history calculator 65 is output from the lookup table 66.

That is to say, the path history calculator 65 receives the outputs h₁ to h₇ of the hard decider 60, survival paths output from the matrix calculator 63 and the states of the optimal path calculator 64 and obtains the values to be output to the selected optimal path.

In other words, the path history calculator 65 is constituted by a memory for storing the values of h₁ to h₇ and survival path, and a circuit for tracing the memory and then obtaining the outputs from the optimal path in a hardware manner. However, in view of the conceptual path history calculator, as shown in FIG.9, when the states of S₁ and S₂ are the same as the current state, the relation between the state change depending on the inputs I₀ and I₁ and the outputs of the post-comb filter for that time can be constructed only by eight states, and the hard decision information and the distance information can be indicated in accordance with the respective states.

That is to say, in order to obtain the output of the optimal path from the Trellis decoder, there should be a view area for a certain period of time. As shown in FIG.9, the sections of the view area includes the information on the transition direction of the respective states and the hard decision values due to the transition.

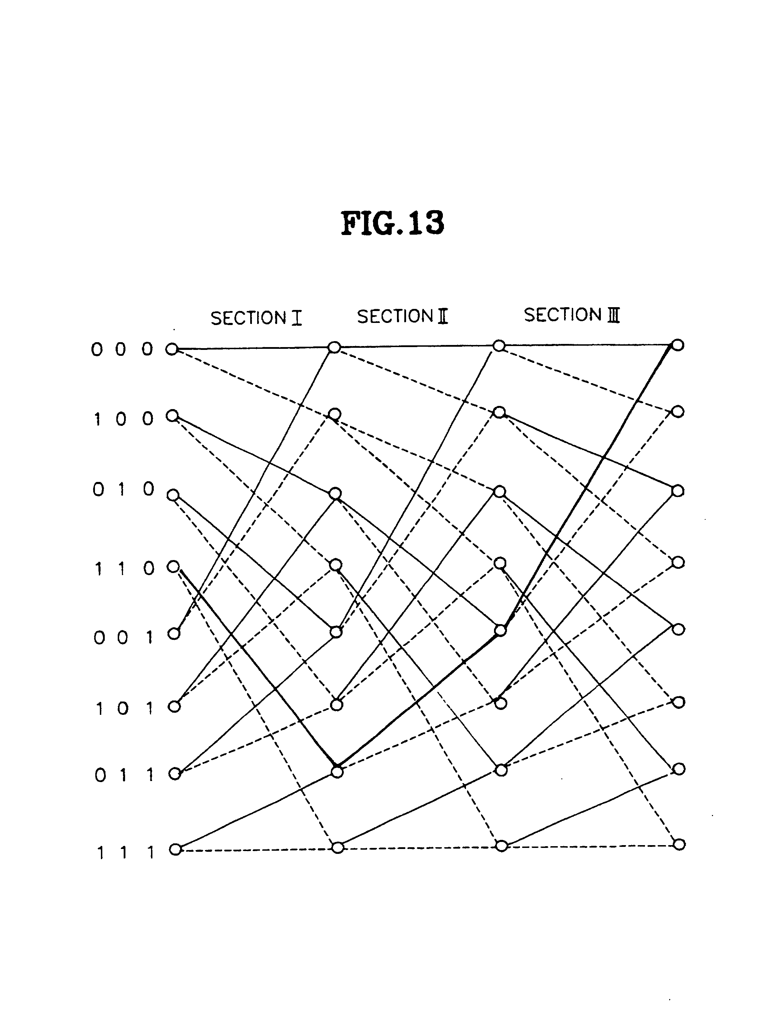

For example, assuming that the sections of the view area are set as three, the optimal state output from the optimal path calculator is '000', and that the survival path of the state '000' is the one marked with a dark line in FIG.13, the path history calculator 65 counter-traces the dark line and outputs information this line within the section I.

That is to say, the hard decision value of the dark lined path within the section I is output as the value of the upper one bit I₀, and the information I₁' that the transition of the optimal path is from the state '110" into '011' is output as the value of the lower one bit I₁.

Therefore, in order that the lookup table 66 receives the information I₁', it is determined what is the input value of the lower one bit I₁ of the Trellis encoder at that time and the resultant value is output.

A partial response Trellis decoder having the specific and detailed configuration described, makes a HDTV system easy to implement.

## Claims

1. A partial response Trellis decoder (39) for decoding a high definition television (HDTV) signal from which NTSC interference has been removed, the HDTV signal comprising.a series of symbols, each symbol being mapped from a first input bit (IN₁, EN₂) and from first and second coded bits (EN₀, EN₁), the first and second coded bits resulting from a convolutional coding of a second input bit (IN₀), the partial response trellis decoder comprising:
a distance mapper (39a) for calculating first, second, third and fourth Euclidean distances between a symbol and selected reference points;
a Viterbi decoder (39b) for Viterbi decoding said first, second, third and fourth Euclidean distances output from said distance mapper to recover said second input bit (DEC₀);
a first delay means (39c, 39d, 39e) for presenting a plurality of consecutive values of said second input bit as recovered by said Viterbi decoder (39b);
a ruler selector (39f) for selecting one of a plurality of ruler types depending on the plurality of consecutive values of said second input bit presented by said first delay means; and
a slicer (39h) arranged to apply each ruler type selected by said ruler selector to the corresponding one of said symbols so as to recover said first input bit (DEC₁).

2. The partial response Trellis decoder claimed in claim 1, further comprising a second delay means (39g) for delaying the symbols for a constant time before input to said slicer (39h) in order to synchronize the input of each symbol to said slicer with the input of the corresponding ruler type selected by said ruler selector (39f).

3. The partial response decoder of claim 1 wherein the slicer comprises:
a hard decider (46) arranged to hard decide a symbol in accordance with each of the ruler types and to output a corresponding set of hard decided bits for the symbol; and
a multiplexer (48) arranged to apply each ruler type selected by said ruler selector to the corresponding set of hard decided bits to recover said first input bit (DEC₁).

4. The partial response Trellis decoder as claimed in claim 3 further comprising a third delay means (47) for delaying the hard decided bits output from said hard decider for a constant time before input to said multiplexer, in order to synchronize the input of each set of hard decided bits to said multiplexer (48) with the input of the corresponding ruler type selected by said ruler selector (54).

5. The partial response Trellis decoder as claimed in any of claims 1 to 4, wherein said distance mapper obtains a first Euclidean distance using the distance between a symbol and the closest point among '0, 8, -8', a second Euclidean distance using the distance between a symbol and the closest point among '2, 10, -6, -14', a third Euclidean distance using the distance between a symbol and the closest point among '4, 12, -4, -12', and a fourth Euclidean distance using the distance between a symbol and the closest point among '6, 14, -2, -10'.

6. The partial response Trellis decoder as claimed in any preceding claim, wherein said first delay means is arranged to delay the data output from said Viterbi decoder (39b) in three steps so as to present a current three bit state and a next three bit state of the recovered second input bit to said ruler selector (39f).

7. The partial response Trellis decoder as claimed in any preceding claim, wherein said ruler selector (39f) selects a first, second, third, fourth, fifth, sixth or seventh ruler type I, II, III, IV, V, VI or VII in-accordance with the signal output from said first delay means (39c, 39d, 39e).

8. The partial response Trellis decoder as claimed in claim 7, wherein said ruler selector (39f) is constructed so as to select a fourth ruler type IV if the signal output from the first delay means is turned from a current state '000' into a next state '000', a second ruler type II if the signal output from the first delay means is turned from a current state '000' into a next state '100', a fifth ruler type V if the signal output from the first delay means is turned from a current state '100' into a next state '010', a third ruler type III if the signal output from the first delay means is turned from a current state '100' into a next state '110', a third ruler type III if the signal output from the delay means is turned from a current state '010' into a next state '001', a fifth ruler type V if the signal output from the first delay means is turned from a current state '010' into a next state '101', a fourth ruler type IV if the signal output from the first delay means is turned from a current state '110' into a next state '011', a sixth ruler type VI if the signal output from the first delay means is turned from a current state '110' into a next state '111', a sixth ruler type VI if the signal output from the delay means is turned from a current state '001' into a next state '000', a fourth ruler type IV if the signal output from the first delay means is turned from a current state '001' into a next state '100', a third ruler type III if the signal output from the first delay means is turned from a current state '101' into a next state '010', a first ruler type I if the signal output from the first delay means is turned from a current state '101' into a next state '110', a fifth ruler type V if the signal output from the first delay means is turned from a current state '011' into a next state '001', a seventh ruler type VII if the signal output from the first delay means is turned from a current state '011' into a next state '101', a second ruler type II if the signal output from the first delay means is turned from a current state '111' into a next state '011', and a fourth ruler type IV if the signal output from the first delay means is turned from a current state '111' into a next state '111'.

9. The partial response Trellis decoder of any preceding claim, wherein said slicer outputs '1' if the input symbol is close to -14 or 2 and '0' if the input signal is close to -6 for said first ruler type I, outputs '1' if the input signal is close to -12 or 4 and '0' if the input symbol is close to -4 for said second ruler type II, outputs '1' if the input symbol is close to -10 or 6 and '0' if the input symbol is close to -2 for said third ruler type III, outputs '1' if the input symbol is close to -8 or 8 and '0' if the input symbol is close to 0 for said fourth ruler type IV, outputs '1' if the input symbol is close to -6 or 10 and '0' if the input symbol is close to 2 for said fifth ruler type V, outputs '1' if the input symbol is close to -4 or 12 and '0' if the input symbol is close to 4 for said sixth ruler type VI, and outputs '1' if the input symbol is close to 14 or -2 and '0' if the input symbol is close to 6 for said seventh ruler type VII.

## Patentansprüche

1. Partial-Response-Trellis-Dekodierer (39) zum Dekodieren eines Signals für hochauflösendes Fernsehen (HDTV), von welchem eine NTSC-Interferenz entfernt wurde, wobei das HDTV-Signal eine Reihe von Symbolen umfasst, wobei jedes Symbol aus einem ersten Eingabebit (IN₁, EN₂) und aus ersten und zweiten kodierten Bits (EN₀, EN₁) umgesetzt wird, wobei die ersten und zweiten kodierten Bits aus einem Faltungs-Kodieren eines zweiten Eingabebits (IN₀) resultieren, wobei der Partial-Response-Trellis-Dekodierer umfasst:
einen Abstands-Umsetzer (39a) zum Berechnen erster, zweiter, dritter und vierter euklidischer Abstände zwischen einem Symbol und ausgewählten Bezugspunkten;
einen Viterbi-Dekodierer (39b) zum Viterbi-Dekodieren der ersten, zweiten, dritten und vierten euklidischen von dem Abstands-Umsetzer ausgegebenen Abstände, um das zweite Eingabebit (DEC₀) wiederherzustellen;
erste Verzögerungsmittel (39c, 39d, 39e) zum Bereitstellen einer Vielzahl von aufeinanderfolgenden Werten des zweiten durch den Viterbi-Dekodierer (39b) wiederhergestellten Eingabebits;
einen Verbindungs-Wähler (39f) zum Auswählen eines Typs von einer Vielzahl von Verbindungstypen, abhängig von der Vielzahl von aufeinanderfolgenden Werten des durch die ersten Verzögerungsmittel bereitgestellten zweiten Eingabebits; und
einen Aufteiler (39h), welcher derart ausgebildet ist, um jeden Verbindungstyp anzuwenden, welcher von dem Verbindungawähler für das entsprechende eine der Symbole ausgewählt worden ist, um so das erste Eingabebit (DEC₁) wiederherzustellen.

2. Partial-Response-Trellis-Dekodierer nach Anspruch 1, weiterhin umfassend zweite Verzögerungsmittel (39g) zum Verzögern der Symbole für eine konstante Zeit, bevor sie zu dem Aufteiler (39h) eingegeben werden, um die Eingabe jedes Symbols zu dem Aufteiler mit der Eingabe des entsprechenden Verbindungstyps zu synchronisieren, welches von dem Verbindungswähler (39f) ausgewählt ist.

3. Partial-Response-Trellis-Dekodierer nach Anspruch 1, wobei der Aufteiler umfasst:
einen Hard-Bestimmer (46), welcher derart ausgebildet ist, um ein Symbol in Übereinstimmung mit jedem der Verbindungstypen hard-zubestimmen und um einen entsprechenden Satz an hard-bestimmten Bits für das Symbol auszugeben; und
einen Multiplexer (48), welcher derart ausgebildet ist, um jeden Verbindungstyp, welcher von dem Verbindungewähler ausgewählt ist, an dem entsprechenden Satz hard-bestimmter Bits anzuwenden, um das erste Eingabebit (DEC₁) wiederherzustellen.

4. Partial-Response-Trellis-Dekodierer nach Anspruch 3, weiterhin umfassend dritte Verzögerungsmittel (47) zum Verzögern der hard-bestimmten Bits, welche von dem Hard-Bestimmer für eine konstante Zeit vor Eingabe zu dem Multiplexer ausgegeben worden sind, um die Eingabe jedes Satzes von hard-bestimmten Bits zu dem Multiplexer (48) mit der Eingabe des entsprechenden Verbindungstyps zu synchronisieren, welcher von dem Verbindungswähler (45) ausgewählt ist.

5. Partial-Response-Trellis-Dekodierer nach einem der Ansprüche 1 bis 4, wobei der Abstands-Umsetzer einen ersten euklidischen Abstand erhält, und zwar unter Verwendung des Abstands zwischen einem Symbol und dem nächsten Punkt aus '0, 8, -8', einen zweiten euklidischen Abstand erhält, und zwar unter Verwendung des Abstands zwischen einem Symbol und dem nächsten Punkt aus '2, 10, -6, -14', einen dritten euklidischen Abstand erhält, und zwar unter Verwendung des Abstands zwischen einem Symbol und dem nächsten Punkt aus '4, 12, -4, -12', und einen vierten euklidischen Abstand erhält, und zwar unter Verwendung des Abstands zwischen einem Symbol und dem nächsten Punkt aus '6, 14, -2,-10'.

6. Partial-Response-Trellis-Dekodierer nach einem der vorangehenden Ansprüche, wobei die ersten Verzögerungsmittel derart ausgebildet sind, um die von dem Viterbi-Dekodierer (39b) ausgegebenen Daten in drei Schritten zu verzögern, um so einen gegenwärtigen Drei-Bit-Zustand und einen nächsten Drei-Bit-Zustand des wiederhergestellten zweiten Eingabebits dem Verbindungswähler (39f) bereitzustellen.

7. Partial-Response-Trellis-Dekodierer nach einem der vorangehenden Ansprüche, wobei der Verbindungswähler (39f) einen ersten, zweiten, dritten, vierten, fünften, sechsten oder siebten Verbindungstyp I, II, III, IV, V, VI oder VII in Übereinstimmung mit dem von den ersten Verzögerungsmitteln (39c, 39d, 39e) ausgegebenen Signal auswählt.

8. Partial-Response-Trellis-Dekodierer nach Anspruch 7, wobei der Verbindungswähler (39f) derart ausgebildet ist, um so einen vierten Verbindungstyp IV auszuwählen, falls das von den ersten Verzögerungsmitteln ausgegebene Signal von einem gegenwärtigen Zustand '000' in einen nächsten Zustand '000' umgewandelt wird, einen zweiten Verbindungstyp II auszuwählen, falls das von den ersten Verzögerungsmitteln ausgegebene Signal von einem Zustand '000' in einen nächsten Zustand '100' umgewandelt wird, einen fünften Verbindungetyp V auszuwählen, falls das von den ersten Verzögerungsmitteln ausgegebene Signal von einem Zustand '100' in einen nächsten Zustand '010' umgewandelt wird, einen dritten Verbindungstyp III auszuwählen, falls das von den ersten Verzögerungsmitteln ausgegebene Signal von einem Zustand '100' in einen nächsten Zustand '110' umgewandelt wird, einen dritten Verbindungstyp III auszuwählen, falls das von den Verzögerungsmitteln ausgegebene Signal von einem gegenwärtigen Zustand '010' in einen nächsten Zustand '001' umgewandelt wird, einen fünften Verbindungstyp V auszuwählen, falls das von den ersten Verzögerungsmitteln ausgegebene Signal von einem Zustand '010' in einen nächsten Zustand '101' umgewandelt wird, einen vierten Verbindungstyp IV auszuwählen, falls das von den ersten Verzögerungsmitteln ausgegebene Signal von einem gegenwärtigen Zustand '110' in einen nächsten zustand '011' umgewandelt wird, einen sechsten Verbindungstyp VI auszuwählen, falls das von den ersten Verzögerungsmitteln ausgegebene Signal von einem gegenwärtigen Zustand '110' in einen nächsten Zustand '111' umgewandelt wird, einen sechsten Verbindungstyp VI auszuwählen, falls das von den Verzögerungsmitteln ausgegebene Signal von einem gegenwärtigen Zustand '001' in einen nächsten Zustand '000' umgewandelt wird, einen vierten Verbindungstyp IV auszuwählen, falls das von den ersten Verzögerungsmitteln ausgegebene Signal von einem gegenwärtigen Zustand '001' in einen nächsten Zustand '100' umgewandelt wird, einen dritten Verbindungstyp III auszuwählen, falls das von den ersten Verzögerungsmitteln ausgegebene Signal von einem Zustand '101' in einen nächsten Zustand '010' umgewandelt wird, einen ersten Verbindungstyp I auszuwählen, falls das von den ersten Verzögerungsmitteln ausgegebene Signal von einem gegenwärtigen Zustand '101' in einen nächsten Zustand '110' umgewandelt wird, einen fünften Verbindungstyp V auszuwählen, falls das von den ersten Verzögerungsmitteln ausgegebene Signal von einem gegenwärtigen Zustand '011' in einen nächsten Zustand '001' umgewandelt wird, einen siebten Verbindungstyp VII auszuwählen, falls das von den ersten Verzögerungsmitteln ausgegebene Signal von einem gegenwärtigen Zustand '011' in einen nächsten Zustand '101' umgewandelt wird, einen zweiten Verbindungstyp II auszuwählen, falls das von den ersten Verzögerungsmitteln ausgegebene Signal von einem gegenwärtigen Zustand '111' in einen nächsten Zustand '011' umgewandelt wird, und einen vierten Verbindungstyp IV auszuwählen, falls das von den Verzögerungsmitteln ausgegebene Signal von einem gegenwärtigen Zustand '111' in einen nächsten Zustand '111' umgewandelt wird.

9. Partial-Response-Trellis-Dekodierer nach einem der vorangehenden Ansprüchen, wobei der Aufteiler '1' ausgibt, falls das Eingabesymbol nahe -14 oder 2 ist, und '0' ausgibt, falls das Eingabesignal nahe -6 für den ersten Verbindungstyp I ist, '1' ausgibt, falls das Eingabesignal nahe -12 oder 4 ist, und '0' ausgibt, falls das Eingabesymbol nahe -4 für den zweiten Verbindungstyp II ist, '1' ausgibt, falls das Bingabesymbol nahe -10 oder 6 ist, und '0' ausgibt, falls das Eingabesymbol nahe -2 für den dritten Verbindungstyp III ist, '1' ausgibt, falls das Eingabesymbol nahe -8 oder 8 ist, und '0' ausgibt, falls das Eingabesymbol nahe 0 für den vierten Verbindungstyp IV ist, '1' ausgibt, falls das Eingabesymbol nahe -6 oder 10 ist, und '0' ausgibt, falls das Eingabesymbol nahe 2 für den fünften Verbindungstyp V ist, '1' ausgibt, falls das Eingabesymbol nahe -4 oder 12 ist, und '0' ausgibt, falls das Eingabesymbol nahe 4 für den sechsten Verbindungstyp VI ist, und '1' ausgibt, falls das Eingabesymbol nahe 14 oder -2 ist, und '0' ausgibt, falls das Eingabesymbol nahe 6 für den siebten Verbindungstyp VII ist.

## Revendications

1. Un décodeur en treillis (39) à réponse partielle pour décoder un signal de télévision haute définition (HDTV), duquel une interférence NTSC a été supprimée, le signal HDTV comprenant une série de symboles, chaque symbole étant mappé à partir d'un premier bit d'entrée (IN₁, EN₂) et à partir de premiers et deuxièmes bits codés (EN₀, EN₁), les premiers et deuxièmes bits codés résultant d'un codage à convolution d'un deuxième bit d'entrée (IN₀), le décodeur en treillis à réponse partielle comprenant :
un mappeur de distance (39a) pour calculer des premières, deuxièmes, troisièmes et quatrièmes distances euclidiennes entre un symbole et des points de référence sélectionnés ;
un décodeur Viterbi (39b) pour effectuer un décodage Viterbi desdites premières, deuxièmes, troisièmes et quatrièmes distances euclidiennes produites par ledit mappeur de distance, afin de récupérer ledit deuxième bit d'entrée (DEC₀);
des premiers moyens à retard (39c, 39d, 39e) pour présenter une pluralité de valeurs consécutives dudit deuxième bit d'entrée, tel que récupéré par ledit décodeur Viterbi (39b) ;
un sélecteur de règles (39f) pour sélectionner l'une parmi d'une pluralité de types de règles selon la pluralité de valeurs consécutives dudit deuxième bit d'entrée présenté par lesdits moyens à retard ; et
un trancheur (39h) agencé pour appliquer chaque type de règle sélectionné par ledit sélecteur de règles à l'un correspondant desdits symboles, de manière à récupérer ledit premier bit d'entrée (DEC₁).

2. Le décodeur en treillis à réponse partielle selon la revendication 1, comprenant en outre des deuxièmes moyens à retard (39g) pour retarder les symboles pour une durée constante avant l'introduction audit trancheur (39h), afin de synchroniser l'entrée de chaque symbole audit trancheur avec l'entrée du type de règles correspondant ayant été sélectionné par ledit sélecteur de règles (39f).

3. Le décodeur à réponse partielle de la revendication 1, dans lequel le trancheur comprend :
un décideur définitif (46) agencé pour prendre une décision définitive sur un symbole, selon chacun des types de règle et pour fournir un jeu correspondant de bits ayant été l'objet d'une décision définitive pour le symbole ; et
un multiplexeur (48) agencé pour appliquer chaque type de règles sélectionné par ledit sélecteur de règles au jeu correspondant de bits ayant été l'objet d'une décision définitive, afin de récupérer ledit premier bit d'entrée (DEC₁).

4. Le décodeur en treillis à réponse partielle selon la revendication 3, comprenant en outre des troisièmes moyens à retard (47) pour retarder les bits ayant été l'objet d'une décision définitive, produits par ledit décideur définitif, pour une durée constante avant l'introduction audit multiplexeur, afin de synchroniser l'entrée de chaque jeu de bits ayant été l'objet d'une décision définitive audit multiplexeur (48) avec l'entrée du type de règle correspondant sélectionné par ledit sélectionneur de règles (54).

5. Le décodeur en treillis à réponse partielle selon l'une quelconque des revendications 1 4, dans lequel ledit mappeur de distance obtient une première distance euclidienne en utilisant la distance qu'il y a entre un symbole et le point le plus proche parmi '0, 8, -8', une deuxième distance euclidienne en utilisant la distance entre un symbole et le point le plus proche parmi '2, 10, -6, -14', une troisième distance euclidienne en utilisant la distance entre un symbole et le point le plus proche parmi '4, 12, -4, -12', et une quatrième distance euclidienne en utilisant la distance entre un symbole et le point le plus proche parmi '6, 14, -2, -10'.

6. Le décodeur en treillis à réponse partielle selon l'une des revendications précédentes, dans lequel lesdits premiers moyens à retard sont agencés pour retarder la sortie de données issue dudit décodeur Viterbi (39b) en trois étapes, de manière à présenter audit sélecteur de règles (39f) un état à trois bits actuel et un état à trois bits subséquent du deuxième bit d'entrée récupéré.

7. Le décodeur en treillis à réponse partielle selon l'une quelconque des revendications précédentes, dans lequel ledit sélecteur de règles (39f) sélectionne un premier, deuxième, troisième, quatrième, cinquième, sixième ou septième type de règles I, II, II, IV, V, VI ou VII, selon le signal de sortie venant desdits premiers moyens à retard (39c, 39d, 39e).

8. Le décodeur en treillis à réponse partielle de la revendication 7, dans lequel ledit sélecteur de règles (39f) est construit de manière à sélectionner un quatrième type de règles IV si le signal de venant desdits premiers moyens à retard passe d'un état actuel '000' en un état subséquent '000', un deuxième type de règles II si le signal de venant desdits premiers moyens à retard passe d'un état actuel '000' en un état subséquent '100', un cinquième type de règles V si le signal de sortie venant desdits premiers moyens à retard passe d'un état actuel '100' en un état subséquent'010', un troisième type de règles III si le signal de sortie venant desdits premiers moyens à retard passe d'un état actuel '100' en un état subséquent'110', un troisième type de règles III si le signal de sortie venant desdits premiers moyens à retard passe d'un état actuel '010' en un état subséquent '001', un cinquième type de règles V si le signal de sortie venant desdits premiers moyens à retard passe d'un état actuel '010' en un état subséquent '101', un quatrième type de règles IV si le signal de sortie venant desdits premiers moyens à retard passe d'un état actuel '110' en un état subséquent '011', un sixième type de règles VI si le signal de sortie venant desdits premiers moyens à retard passe d'un état actuel '110' en un état subséquent '111', un sixième type de règles VI si le signal de sortie venant desdits premiers moyens à retard passe d'un état actuel '001' en un état subséquent '000', un quatrième type de règles IV si le signal de sortie venant desdits premiers moyens à retard passe d'un état actuel '001' en un état subséquent '100', un troisième type de règles III si le signal de sortie venant desdits premiers moyens à retard passe d'un état actuel '101' en un état subséquent '010', un premier type de règles I si le signal de sortie venant desdits premiers moyens à retard passe d'un état actuel '101' en un état subséquent '110', un cinquième type de règles V si le signal de sortie venant desdits premiers moyens à retard passe d'un état actuel '011' en un état subséquent '001', un septième type de règles VII si le signal de sortie venant desdits premiers moyens à retard passe d'un état actuel '011' en un état subséquent '101', un deuxième type de règles II si le signal de sortie venant desdits premiers moyens à retard passe d'un état actuel '111' en un état subséquent '011', et un quatrième type de règles IV si le signal de sortie venant desdits premiers moyens à retard passe d'un état actuel '111' en un état subséquent '111'.

9. Le décodeur en treillis à réponse partielle selon l'une quelconque des revendications précédentes, dans lequel ledit trancheur produit un '1' si le symbole d'entrée est proche de -14 ou de 2 et '0' si le signal d'entrée est proche de -6 pour ledit premier type de règles 1, produit un '1' si le symbole d'entrée est proche de -1.2 ou de 4 et '0' si le signal d'entrée est proche de -4 pour ledit deuxième type de règles II, produit un '1' si le symbole d'entrée est proche de -10 ou de 6 et '0' si le signal d'entrée est proche de -2 pour ledit troisième type de règles III, produit un '1' si le symbole d'entrée est proche de -8 ou de 8 et '0' si le signal d'entrée est proche de 0 pour ledit quatrième type de règles IV, produit un '1' si le symbole d'entrée est proche de -6 ou de 10 et '0' si le signal d'entrée est proche de 2 pour ledit cinquième type de règles V, produit un '1' si le symbole d'entrée est proche de - 4 ou de 12 et '0' si le signal d'entrée est proche de 4 pour ledit sixième type de règles VI, et produit un '1' si le symbole d'entrée est proche de 14 ou de -2 et '0' si le signal d'entrée est proche de 6 pour ledit septième type de règles VII.
